# EUROPÄISCHE PATENTSCHRIFT

(11) **EP 3 206 835 B1**
(45) Veröffentlichungstag und Bekanntmachung des Hinweises auf die Patenterteilung: **07.07.2021**
(21) Anmeldenummer: 15807590.3
(22) Anmeldetag: 11.10.2015
(51) Int. Cl.: B24B 53/04, B24B 5/22

(54) **VORRICHTUNG ZUM SPITZENLOSEN RUNDSCHLEIFEN UND VERFAHREN ZUR VERWENDUNG EINER VORRICHTUNG ZUM SPITZENLOSEN RUNDSCHLEIFEN**
CENTERLESS GRINDING MACHINE AND METHOD FOR THE USE OF A CENTERLESS GRINDING MACHINE
DISPOSITIF DE RECTIFICATION CYLINDRIQUE SANS CENTRE ET PROCÉDÉ D'UTILISATION D'UN TEL DISPOSITIF

(30) Priorität: 13.10.2014 DE 102014014877
(43) Veröffentlichungstag der Anmeldung: 23.08.2017
(73) Patentinhaber: Modler, Hans-Wilhelm, 63801 Kleinostheim (DE)
(72) Erfinder: Modler, Hans-Wilhelm, 63801 Kleinostheim (DE)
(74) Vertreter: Nitz, Astrid
(86) Internationale Anmeldenummer: PCT/DE2015/000494
(87) Internationale Veröffentlichungsnummer: WO 2016/058575

(56) Entgegenhaltungen:
- EP-A1- 0 449 767
- DE-A1- 2 249 264
- None

## Beschreibung

Die Erfindung betrifft eine Vorrichtung zum spitzenlosen Rundschleifen von runden, zylindrischen Werkstücken, nach dem Oberbegriff von Anspruch 1 und ein Verfahren zur Verwendung einer der Vorrichtungen nach einem der Ansprüche 1 bis 9, nach dem Oberbegriff von Anspruch 10.

Bekannt sind Vorrichtungen zum spitzenlosen Rundschleifen, wobei für verschiedene Werkstückarten jeweils andere Maschinen bereitgestellt werden müssen, so dass ein großer Maschinenpark vorgehalten werden muss.

Die EP 0 449 767 A1 und die DE 2 249 264 offenbaren spitzenlose Rundschleifmaschinen, wobei ein komplexer Aufbau gegeben ist, der eine aufwendige Einrichtung, insbesondere bei der Zustellung und Abrichtung von Schleifscheiben erfordert, sowie geometrischen Einschränkungen bei der Einrichtung unterliegt.

Aufgabe der vorliegenden Erfindung ist es, eine Vorrichtung zum spitzenlosen Rundschleifen bereitzustellen, die einen einfachen, sicheren, wartungsarmen Betrieb ermöglicht

Die Aufgabe wird gelöst durch eine Vorrichtung zum spitzenlosen Rundschleifen von runden, zylindrischen Werkstücken, die eine Schleifscheibe mit einer Rotationsachse, eine Regelscheibe zum Andrücken des Werkstücks an die Schleifscheibe mit einer Rotationsachse, ein Auflagelineal zum Auflegen des Werkstücks und eine Abrichtvorrichtung für die Schleifscheibe und/oder eine Abrichtvorrichtung für die Regelscheibe aufweist, wobei diese Elemente derart auf einem Maschinenbett, insbesondere in einer im Raum geneigten Montagefläche, angeordnet sind, dass die Schleifscheibe und die Regelscheibe und das Auflagelineal das Werkstück im Moment des Schleifens berühren, wobei das Werkstück in einem sich durch die angrenzenden Regelscheibe, Schleifscheibe und Auflagelineal bildenden Schleifspalt angeordnet ist, wobei die Schleifscheibe und die Regelscheibe und die Abrichtvorrichtung für die Schleifscheibe und/oder die Abrichtvorrichtung für die Regelscheibe jeweils auf einem hydraulisch und/oder elektromotorisch angetriebenen, zumindest entlang einer Längsbewegungsachse längs verstellbaren Schlitten direkt auf dem Maschinenbett angebracht sind, wobei die Längsbewegungsachse des Schlittens der Schleifscheibe und/oder die Längsbewegungsachse des Schlittens der Regelscheibe und/oder die Längsbewegungsachse des Schlittens der Abrichtvorrichtung für die Regelscheibe und/oder die Längsbewegungsachse des Schlittens der Abrichtvorrichtung für die Schleifscheibe verstellbar im Sinne einer Drehbewegung um eine Drehachse des Schlittens der Schleifscheibe und/oder Drehachse des Schlittens der Regelscheibe und/oder Drehachse des Schlittens der Abrichtvorrichtung für die Regelscheibe und/oder Drehachse des Schlittens der Abrichtvorrichtung für die Schleifscheibe eingerichtet sind.

Die Vorrichtung ist geeignet für Werkstücke mit rotationssymmetrischer Längsachse, die auf dem Auflagelineal aufliegen und von der Regelscheibe mit paralleler oder im Raum geneigter Rotationsachse kontrolliert angetrieben sowie von der Schleifscheibe mit dazu angeordneter, insbesondere geneigter Rotationsachse zerspanend bearbeitet werden. Insbesondere zum Aufbringen einer Vorschubbewegung für die Zerspanung, dem Öffnen eines Schleifspaltes zum Be- und Entladen, und zum Einstellen der Geometrie und Genauigkeiten sind erfindungsgemäß Schlittensysteme mit Verfahrbewegungen vorgesehen, die auf einfache Weise individuell einrichtbar auf die jeweiligen Werkstücke und Bearbeitungsverfahren einstellbar sind. Die Schlittensysteme der Regelscheibe und der Schleifscheibe beispielsweise lassen sich um jeweils eine Drehachse so verstellen, dass ein Winkel zueinander gebildet wird, der wiederum einen Winkel zu einer Werkstücklängsachse erlaubt. Damit kann ein Gerade- oder Schrägeinstich auf das Werkstück erreicht werden. Zum Abrichten und Profilieren von abrasiven Schleif- und/oder Regelscheiben sind Abrichteinrichtungen mit weiteren Schlittensystemen vorgesehen. Bei der vorliegenden Erfindung machen es die einwirkenden Kräfte des spitzenlosen Schleifprozesses auf das Werkstück leicht, insbesondere durch die Kombination aus Schleifprozess und Gravitationskraft, einfaches und schnelles Schleifen der Werkstücke zu erreichen. Weiterhin können insbesondere durch Verstellung der Drehwinkel und Anpassung der Ebenen bei der vorliegenden Erfindung Anordnungen für leichte und schwere sowie kleine und große Werkstücke angepasst ausgewählt werden. Ein weiterer Aspekt ist das vereinfachte Zu- und Abführen der Werkstücke zu und von einem Schleifspalt, da es im Wesentlichen immer in derselben Richtung erfolgen kann und somit die Zuführ- und Abführeinrichtungen nicht verändert werden müssen. Dies vermeidet, dass je nach. Größe, Gewicht, Form des Werkstücks und Schleifaufgabe andere Konstruktionen notwendig werden. Es ist somit auch eine einfache und schnelle Optimierung hinsichtlich Genauigkeit und Kosten möglich.

Vorteilhaft ist es, wenn zumindest eine der Längsbewegungsachsen der Schlitten der Schleifscheibe und/oder der Regelscheibe und/oder der Abrichtvorrichtung für die Regelscheibe und/oder der Abrichtvorrichtung für die Schleifscheibe zumindest in der Maschinenaufbauebene schräg zu zumindest einer der übrigen Längsbewegungsachsen der Schlitten der Schleifscheibe und/oder der Regelscheibe und/oder der Abrichtvorrichtung für die Regelscheibe und/oder der Abrichtvorrichtung für die Schleifscheibe eingerichtet sind.

Vorteilhaft ist es, wenn die Abrichtvorrichtung für die Schleifscheibe und/oder Ab-. richtvorrichtung für die Regelscheibe eine Abrichtschleifscheibe mit einer Rotationsachse und/oder einen Abziehwinkel umfasst.

Vorteilhaft ist es, wenn jeweils zumindest die Rotationsachse der Schleifscheibe und/oder der Regelscheibe und/oder der Abrichtvorrichtungen schräg gegenüber jeweils zumindest der Längsbewegungsachse der Schlitten der Schleifscheibe und/oder der Regelscheibe und/oder der Abrichtvorrichtung für die Regelscheibe und/oder der Abrichtvorrichtung für die Schleifscheibe eingerichtet sind.

Vorteilhaft ist es, wenn die Ebene des Maschinenbetts im Raum geneigt ist, insbesondere derart, dass das eingebrachte Werkstück durch eine Schwerkraftbeaufschlagung weiterzubewegen ist.

Vorteilhaft ist es, wenn die Rotationsachse der Schleifscheibe und die Rotationsachse der Regelscheibe schräg zueinander ausgerichtet sind, insbesondere dass die Rotationsachse der Schleifscheibe und die Rotationsachse der Regelscheibe in Richtung eines schräg abfallenden Maschinenbetts aufeinander zulaufen.

Vorteilhaft ist es, wenn bezogen auf ein schräg abfallendes Maschinenbett eine der Rotationsachsen horizontal eingerichtet und die andere Rotationsachse schräg nach unten auf die horizontale Rotationsachse zulaufend eingerichtet ist.

Vorteilhaft ist es, wenn die Rotationsachse der Abrichtscheibe parallel zu der Rotationsachse der Regelscheibe und/oder der Schleifscheibe ausgerichtet ist.

Vorteilhaft ist es, wenn eine Höhenlage der Rotationsachsen und/oder der Längsbewegungsachsen und/oder des Werkstücks, insbesondere durch Verstellung einer Höhe des Auflagelineals des Werkstücks, einstellbar ist.

Die Aufgabe wird ebenfalls gelöst durch ein Verfahren zur Verwendung einer der Vorrichtungen nach einem der Ansprüche 1 bis 9, wobei eine Schleifscheibe mit einer Rotationsachse, eine Regelscheibe mit einer Rotationsachse, ein Auflagelineal zum Auflegen des Werkstücks und eine Abrichtvorrichtung für die Schleifscheibe und/oder eine Abrichtvorrichtung für die Regelscheibe derart auf einem Maschinenbett, insbesondere in einer im Raum geneigten Montagefläche, angeordnet werden, dass die Schleifscheibe und die Regelscheibe und das Auflagelineal das Werkstück beim Schleifen des Werkstücks berühren, wobei die Schleifscheibe und/ die Regelscheibe und die Abrichtvorrichtung für die Schleifscheibe und/ die Abrichtvorrichtung für die Regelscheibe jeweils auf einem hydraulisch und/oder elektromotorisch angetriebenen, zumindest entlang einer Längsbewegungsachse längs verstellbaren, direkt auf dem Maschinenbett angeordneten Schlitten in ihrer Position verstellt werden, wobei die Längsbewegungsachse des Schlittens der Schleifscheibe und/oder die Längsbewegungsachse des Schlittens der Regelscheibe und/oder die Längsbewegungsachse des Schlittens der Abrichtvorrichtung für die Regelscheibe und/oder die Längsbewegungsachse des Schlittens der Abrichtvorrichtung für die Schleifscheibe mittels einer Drehbewegung um jeweils eine Drehachse des Schlittens der Schleifscheibe und/oder des Schlittens der Regelscheibe und/oder des Schlittens der Abrichtvorrichtung für die Regelscheibe und/oder des Schlittens der Abrichtvorrichtung für die Schleifscheibe eingerichtet werden.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine erfindungsgemäße Vorrichtung zum spitzenlosen Rundschleifen,
- Fig. 2: eine erfindungsgemäße Vorrichtung und
- Fig. 3: eine erfindungsgemäße Vorrichtung.

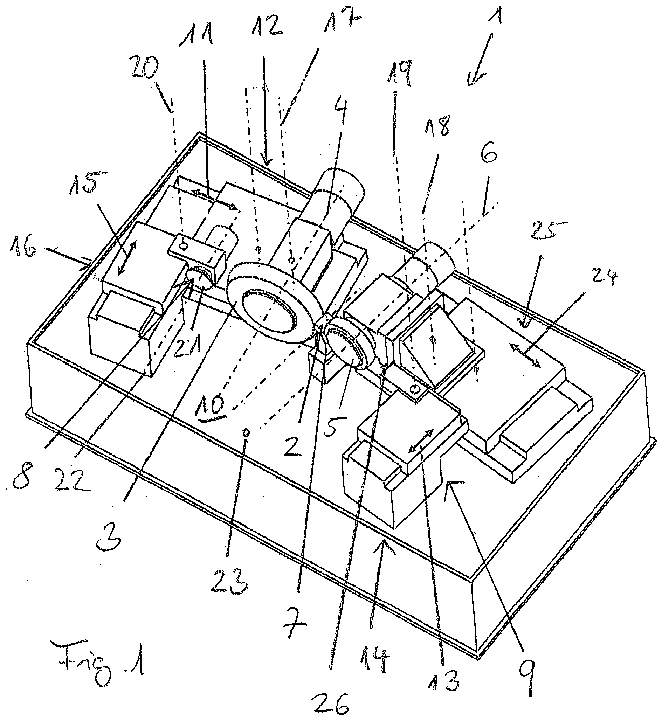

Fig. 1 zeigt eine erfindungsgemäße Vorrichtung 1 zum spitzenlosen Rundschleifen von zylindrischen Werkstücken 2 mit beispielhaft angeordneten Achsen. Die Vorrichtung 1 weist eine Schleifscheibe 3 auf mit einer Rotationsachse 4, eine Regelscheibe 5 zum Andrücken des Werkstücks an die Schleifscheibe mit einer Rotationsachse 6, ein Auflagelineal 7 zum Auflegen des Werkstücks, eine Abrichtvorrichtung 8 für die Schleifscheib und eine Abrichtvorrichtung 9 für die Regelscheibe. Die Einrichtungen sind auf einem Maschinenbett 10, insbesondere in einer im Raum geneigten Montagefläche 23, angeordnet, so dass die Schleifscheibe und die Regelscheibe und das Auflagelineal das Werkstück im Moment des Schleifens berühren, wobei das Werkstück in einem sich durch die angrenzenden Regelscheibe, Schleifscheibe und Auflagelineal bildenden Schleifspalt angeordnet ist. Die Schleifscheibe und/oder die Regelscheibe und/oder die Abrichtvorrichtung für die Schleifscheibe und/oder die Abrichtvorrichtung für die Regelscheibe sind jeweils auf einem hydraulisch und/oder elektromotorisch angetriebenen, zumindest entlang einer Längsbewegungsachse längs verstellbaren Schlitten angebracht. Die Längsbewegungsachse 11 des Schlittens 12, insbesondere eines Schlittensystems mit CNC Achse, der Schleifscheibe und/oder die Längsbewegungsachse 24 des Schlittens 25, insbesondere wiederum eines Schlittensystems mit CNC Achse, der Regelscheibe und/oder die Längsbewegungsachse 13 des Schlittens 14 der Abrichtvorrichtung für die Regelscheibe und/oder die Längsbewegungsachse 15 des Schlittens 16 der Abrichtvorrichtung für die Schleifscheibe sind verstellbar im Sinne einer Drehbewegung um eine Drehachse 17 der Längsbewegungsachse 11 des Schlittens 12 der Schleifscheibe 3 und/oder Drehachse 18 der Längsbewegungsachse des Schlittens der Regelscheibe und/oder Drehachse 19 der Längsbewegungsachse des Schlittens der Abrichtvorrichtung für die Regelscheibe und/oder Drehachse 20 der Längsbewegungsachse des Schlittens der Abrichtvorrichtung für die Schleifscheibe eingerichtet.

Durch die vorliegende Vorrichtung ist somit ein individuell anpassbares Schrägeinstichschleifen ermöglicht.

Das Werkstück mit rotationssymmetrischer Längsachse liegt auf dem Auflagelineal und wird von der Regelscheibe mit paralleler oder im Raum geneigter Rotationsachse kontrolliert angetrieben sowie von der Schleifscheibe mit dazu angeordneter geneigter Spindelachse zerspanend bearbeitet. Zum Aufbringen der Vorschubbewegung für die Zerspanung, dem Öffnen des Schleifspaltes zum Be- und Entladen, und zum Einstellen der Geometrie und Genauigkeiten sind die erfindungsgemäßen Schlittensysteme mit Verfahrbewegungen vorgesehen. Zum Abrichten und Profilieren von abrasiven Schleif- und/oder Regelscheiben sind Abrichteinrichtungen mit weiteren Schlittensystemen vorgesehen. Beide Schlittensysteme der Regelscheibe und der Schleifscheibe lassen sich um jeweils eine Drehachse so verstellen, dass ein Winkel zueinander gebildet wird, der wiederum einen Winkel zur Werkstücklängsachse erlaubt. Damit kann ein Schrägeinstich auf das Werkstück erreicht werden. Weitere Neigungen der Achsen von Schleifspindel, Regelspindel und Werkstück in weiteren Raumebenen sind für die Einstellung des spitzenlosen Schleifprozesses von Bedeutung. Die Höhenlage des Werkstücks zu Schleif- und Regelscheibe ist entsprechend individuell wählbar. Neben der Schleif- und Regelscheibe kann jeweils ein Schlittensystem mit CNC Querachsen auf dem Maschinenbett angebracht sein mit beliebigen Abrichtwerkzeugen, wie Einzeldiamant und andere, insbesondere jedoch eine Abrichtschleifscheibe, insbesondere eine Diamantrolle, mit einer Rotationsachse 22. Das Abrichten der Schleifscheibe und der Regelscheibe kann jeweils CNC bahngesteuert über die Schlittensystemachsen erfolgen. Weitere Neigungen der Längsachsen der Diamantrolle und des Regelscheibenabrichtwerkzeugs in weiteren Raumebenen sind für die Einstellung des spitzenlosen Schleifprozesses von Bedeutung. Zur Ergänzung des Schrägeinstichwinkels auf das Werkstück lässt sich die Rotationsachse der Schleifscheibe auf dem Schlittensystem um die Drehachse schwenken, was nicht innerhalb der Ebene sein muss, ebenso die Rotationsachse der Regelscheibe. Die Orientierung der Achsen im Raum sind in den Figuren nur beispielhaft gezeigt. Diese können beliebig zueinander sein, um für den jeweiligen spitzenlosen Schleifprozess die optimale Lage von Werkstück und Schleif- und Regelscheiben zueinander zu ermöglichen. Wichtig ist dabei die jeweilige und gleichzeitig notwendige Berührung von Schleifscheibe, Regelscheibe und Lineal mit dem Werkstück.

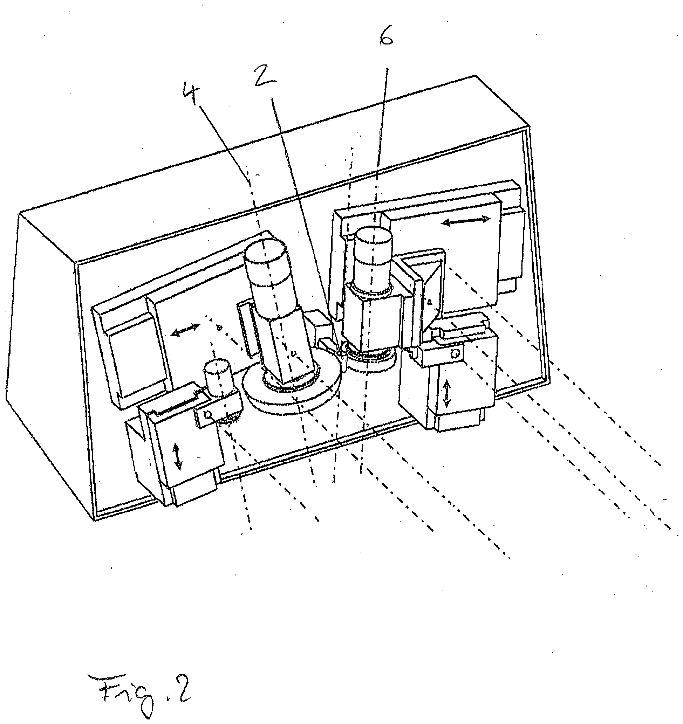

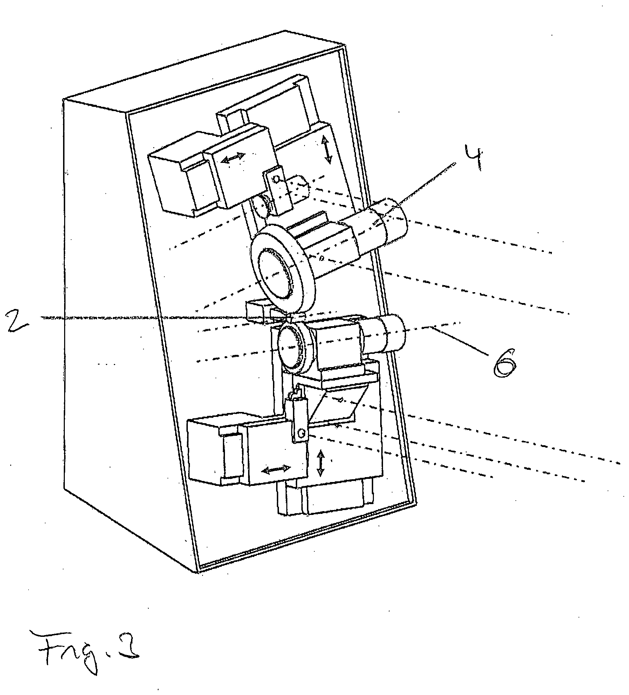

Fig. 2 und Fig. 3 zeigen weiterhin Ausführungsformen einer erfindungsgemäßen Vorrichtung 1. Beispielhaft zeigen die Fig. 2 und 3 weitere sinnvolle Orientierungen der Schleifscheibenrotationsachse 4, der Regelscheibenrotationsachse 6 und Werkstückachse zueinander. Der Schräg- oder Geradeeinstichwinkel kann durch die vorliegende Erfindung auf einfache Weise beliebig gewählt werden.

### BEZUGSZEICHENLISTE

- 1: Vorrichtung zum spitzenlosen Rundschleifen
- 2: Werkstück
- 3: Schleifscheibe
- 4: Rotationsachse
- 5: Regelscheibe
- 6: Rotationsachse
- 7: Auflagelineal
- 8: Abrichtvorrichtung
- 9: Abrichtvorrichtung
- 10: Maschinenbett
- 11: Längsbewegungsachse
- 12: Schlitten
- 13: Längsbeweguhgsachse
- 14: Schlitten
- 15: Längsbewegungsachse
- 16: Schlitten
- 17: Drehachse
- 18: Drehachse
- 19: Drehachse
- 20: Drehachse
- 21: Abrichtschleifscheibe
- 22: Rotationsachse
- 23: Montagefläche
- 24: Längsbewegungsachse
- 25: Schlitten
- 26: Abziehwinkel

## Patentansprüche

1. Vorrichtung (1) zum spitzenlosen Rundschleifen von runden, zylindrischen Werkstücken (2), die eine Schleifscheibe (3) mit einer Rotationsachse (4), eine Regelscheibe (5) zum Andrücken des Werkstücks an die Schleifscheibe mit einer Rotationsachse (6), ein Auflagelineal (7) zum Auflegen des Werkstücks und eine Abrichtvorrichtung (8) für die Schleifscheibe und/oder eine Abrichtvorrichtung (9) für die Regelscheibe aufweist, wobei diese Elemente derart auf einem Maschinenbett (10), insbesondere in einer im Raum geneigten Montagefläche (23), angeordnet sind, dass die Schleifscheibe und die Regelscheibe und das Auflagelineal das Werkstück im Moment des Schleifens berühren, wobei das Werkstück in einem sich durch die angrenzenden Regelscheibe, Schleifscheibe und Auflagelineal bildenden Schleifspalt angeordnet ist, wobei die Schleifscheibe und die Regelscheibe und die Abrichtvorrichtung für die Schleifscheibe und/oder die Abrichtvorrichtung für die Regelscheibe jeweils auf einem hydraulisch und/oder elektromotorisch angetriebenen, zumindest entlang einer Längsbewegungsachse längs verstellbaren Schlitten direkt auf dem Maschinenbett angebracht sind, wobei die Längsbewegungsachse (11) des Schlittens (12) der Schleifscheibe und/oder die Längsbewegungsachse (24) des Schlittens (25) der Regelscheibe und/oder die Längsbewegungsachse (13) des Schlittens (14) der Abrichtvorrichtung für die Regelscheibe und/oder die Längsbewegungsachse (15) des Schlittens (16) der Abrichtvorrichtung für die Schleifscheibe verstellbar im Sinne einer Drehbewegung um eine Drehachse (17) des Schlittens (12) der Schleifscheibe (3) und/oder Drehachse (18) des Schlittens der Regelscheibe und/oder Drehachse (19) des Schlittens der Abrichtvorrichtung für die Regelscheibe und/oder Drehachse (20) des Schlittens der Abrichtvorrichtung für die Schleifscheibe eingerichtet sind.

2. Vorrichtung nach Anspruch 1, **dadurch gekennzeichnet, dass** zumindest eine der Längsbewegungsachsen der Schlitten der Schleifscheibe und/oder der Regelscheibe und/oder der Abrichtvorrichtung für die Regelscheibe und/oder der Abrichtvorrichtung für die Schleifscheibe zumindest in der Maschinenaufbauebene schräg zu zumindest einer der übrigen Längsbewegungsachsen der Schlitten der Schleifscheibe und/oder der Regelscheibe und/oder der Abrichtvorrichtung für die Regelscheibe und/oder der Abrichtvorrichtung für die Schleifscheibe eingerichtet sind.

3. Vorrichtung nach einem der Ansprüche 1 oder 2, **dadurch gekennzeichnet, dass** die Abrichtvorrichtung (8) für die Schleifscheibe und/oder Abrichtvorrichtung (9) für die Regelscheibe eine Abrichtschleifscheibe (21) mit einer Rotationsachse (22) und/oder einen Abziehwinkel (26) umfasst.

4. Vorrichtung nach einem der Ansprüche 1 bis 3, **dadurch gekennzeichnet, dass** jeweils zumindest die Rotationsachse der Schleifscheibe und/oder der Regelscheibe und/oder der Abrichtvorrichtungen schräg gegenüber jeweils zumindest der Längsbewegungsachse der Schlitten der Schleifscheibe und/oder der Regelscheibe und/oder der Abrichtvorrichtung für die Regelscheibe und/oder der Abrichtvorrichtung für die Schleifscheibe eingerichtet sind.

5. Vorrichtung nach einem der Ansprüche 1 bis 4, **dadurch gekennzeichnet, dass** die Ebene (23) des Maschinenbetts (10) im Raum geneigt ist, insbesondere derart, dass das eingebrachte Werkstück durch eine Schwerkraftbeaufschlagung weiterzubewegen ist.

6. Vorrichtung nach einem der Ansprüche 1 bis 5, **dadurch gekennzeichnet, dass** die Rotationsachse der Schleifscheibe und die Rotationsachse der Regelscheibe schräg zueinander ausgerichtet sind, insbesondere dass die Rotationsachse der Schleifscheibe und die Rotationsachse der Regelscheibe in Richtung eines schräg abfallenden Maschinenbetts (10) aufeinander zulaufen.

7. Vorrichtung nach einem der Ansprüche 1 bis 5, **dadurch gekennzeichnet, dass** bezogen auf ein schräg abfallendes Maschinenbett eine der Rotationsachsen horizontal eingerichtet und die andere Rotationsachse schräg nach unten auf die horizontale Rotationsachse zulaufend eingerichtet ist.

8. Vorrichtung nach einem der Ansprüche 1 bis 6, **dadurch gekennzeichnet, dass** die Rotationsachse der Abrichtscheibe parallel zu der Rotationsachse der Regelscheibe und/oder der Schleifscheibe ausgerichtet ist.

9. Vorrichtung nach einem der Ansprüche 1 bis 7, **dadurch gekennzeichnet, dass** eine Höhenlage der Rotationsachsen und/oder der Längsbewegungsachsen und/oder des Werkstücks, insbesondere durch Verstellung einer Höhe des Auflagelineals des Werkstücks, einstellbar ist.

10. Verfahren zur Verwendung einer der Vorrichtungen nach einem der Ansprüche 1 bis 9, wobei eine Schleifscheibe mit einer Rotationsachse, eine Regelscheibe mit einer Rotationsachse, ein Auflagelineal zum Auflegen des Werkstücks und eine Abrichtvorrichtung für die Schleifscheibe und/oder eine Abrichtvorrichtung für die Regelscheibe derart auf einem Maschinenbett, insbesondere in einer Ebene, angeordnet werden,
dass die Schleifscheibe und die Regelscheibe und das Auflagelineal das Werkstück beim Schleifen des Werkstücks berühren, wobei die Schleifscheibe und die Regelscheibe und/ die Abrichtvorrichtung für die Schleifscheibe und/oder die Abrichtvorrichtung für die Regelscheibe jeweils auf einem hydraulisch und/oder elektromotorisch angetriebenen, zumindest entlang einer Längsbewegungsachse längs verstellbaren, direkt auf dem Maschinenbett angeordneten Schlitten in ihrer Position verstellt werden, wobei die Längsbewegungsachse des Schlittens der Schleifscheibe und/oder die Längsbewegungsachse des Schlittens der Regelscheibe und/oder die Längsbewegungsachse des Schlittens der Abrichtvorrichtung für die Regelscheibe und/oder die Längsbewegungsachse des Schlittens der Abrichtvorrichtung für die Schleifscheibe mittels einer Drehbewegung um jeweils eine Drehachse des Schlittens der Schleifscheibe und/oder des Schlittens der Regelscheibe und/oder des Schlittens der Abrichtvorrichtung für die Regelscheibe und/oder des Schlittens der Abrichtvorrichtung für die Schleifscheibe eingerichtet werden.

## Claims

1. Device (1) for centerless round grinding of round, cylindrical work pieces (2), having a grinding wheel (3) with an axis of rotation (4), a regulation wheel (5) for pressing of the work piece against the grinding wheel with an axis of rotation (6), a workrest blade (7) for putting on the work piece and/or a truing device (8) for the grinding wheel and/or a truing device (9) for the regulation wheel, these elements arranged in this way on a machine bed (10), in particular in an assembly surface (23) inclined in the space, that the grinding wheel and the regulation wheel and the workrest blade touch the work piece at the moment of grinding, whereas the work piece is arranged in a grinding gap being formed by the adjoining regulation wheel, grinding wheel and workrest blade, whereas the grinding wheel and/or the regulation wheel and/or the truing device for the grinding wheel and/or the truing device for the regulation wheel respectively are arranged on a hydraulic and/or electromotive driven carriage directly on the machine bed, which is at least longitudinally adjustable along a longitudinal motion axis, whereas the longitudinal motion axis (11) of the carriage (12) of the grinding wheel and/or the longitudinal motion axis (24) of the carriage (25) of the regulation wheel and/or the longitudinal motion axis (13) or the carriage (14) of the truing device for the regulation wheel and/or the longitudinal motion axis (15) of the carriage (16) of the truing device for the grinding wheel is adjustable within the meaning of a rotational movement around a rotation axis (17) of the carriage (12) of the grinding wheel (3) and/or the rotation axis (18) of the carriage of the grinding wheel and/or the rotation axis (19) of the carriage of the truing device for the regulation wheel and/or the rotational axis (20) of the carriage of the truing device of the grinding wheel are arranged.

2. Device according to claim 1, **characterized by** the fact that at least one of the longitudinal motion axis of the carriages of the grinding wheel and/or the regulation wheel and/or the truing device for the regulation wheel and/or the truing device for the grinding wheel at least in the machine mounting plane is arranged inclined to at least one of the other longitudinal motion axis of the carriages of the grinding wheel and/or regulating wheel and/or truing device for the regulation wheel and/or the truing device for the grinding wheel.

3. Device according to one of the claims 1 or 2, **characterized by** the fact that the truing device (8) for the grinding wheel and/or the truing device (9) for the regulation wheel has a truing device grinding wheel (21) with a rotation axis (22) and/or a sharpening angle (26).

4. Device according to claim 1 to 3, **characterized by** the fact that respectively arranged are at least the rotation axis of the grinding wheel and/or of the regulation wheel and/or of the truing devices inclined against at least the longitudinal motion axis of the carriages of the grinding wheel and/or the regulation wheel and/or the truing device for the regulation wheel and/or the truing device for the grinding wheel.

5. Device according to claim 1 to 4, **characterized by** the fact that the assembly surface (23) of the machine bed (10) is inclined in space, especially in that way, that the inserted work piece is to be moved by a gravity impact.

6. Device according to claim 1 to 5, **characterized by** the fact that the rotation axis of the grinding wheel and the rotation axis of the regulation wheel are installed inclined to each other, especially that the rotation axis of the grinding wheel and the rotation axis of the regulation wheel aim at each other in the direction of an inclined sloping machine bed (10).

7. Device according to claim 1 to 5, **characterized by** the fact that one of the rotation axes is set up horizontal in relation to a inclined sloping machine bed and the other rotation axis is set up inclined sloping to the horizontal rotation axis.

8. Device according to claim 1 to 6, **characterized by** the fact that the rotation axis of the truing wheel is installed parallel to the rotation axis of the regulation wheel and/or the grinding wheel.

9. Device according to claim 1 to 7, **characterized by** the fact that the relative height position of the rotation axes and/or the longitudinal motion axis and/or the work piece is adjustable, especially by adjustment of the height position of the workrest blade of the work piece.

10. Method for use of one of the devices according to one of the claims 1 to 9, whereas a grinding wheel with a rotation axis, a regulation wheel with a rotation axis, a workrest blade for putting on the work piece and/or a truing device for the grinding wheel and/or a truing device for the regulation wheel, in such a way arranged on a machine bed, in particular in an assembly surface, that the grinding wheel and the regulation wheel and the workrest blade touch the work piece at the moment of grinding , whereas the grinding wheel and/or the regulation wheel and/or the truing device for the grinding wheel and/or the truing device for the regulation wheel respectively are arranged on a hydraulic and/or electromotive driven carriage directly on the machine bed, which is at least longitudinally adjustable along a longitudinal motion axis, whereas the longitudinal motion axis of the carriage of the grinding wheel and/or the longitudinal motion axis of the carriage of the regulation wheel and/or the longitudinal motion axis or the carriage of the truing device for the regulation wheel and/or the longitudinal motion axis of the carriage of the truing device for the grinding wheel are adjusted by a rotational movement around a respective rotation axis of the carriage of the grinding wheel and/or of the carriage of the regulating wheel and/or of the carriage of the truing device for the regulation wheel and/or of the carriage of the truing device of the grinding wheel.

## Revendications

1. Dispositif (1) pour la rectification circulaire sans pointe de pièces cylindriques cylindriques (2), comportant une meule (3) avec un axe de rotation (4), une meule (5) pour la pression de la pièce sur la meule avec un axe de rotation (6), une ligne de fixation (7) pour la fixation de la pièce et un dispositif de réglage (8) pour la rectification muni d'un disque de meulage et/ou d'un dispositif de réglage (9) pour le disque de réglage, disposés sur un lit de machine (10), en particulier sur une surface de montage inclinée dans le local (23), de telle sorte que le disque de meulage, le disque de réglage et la ligne de fixation touchent la pièce à usiner au moment de la rectification, la pièce à usiner étant une fissure de rectification formant le disque de réglage, la meule et la ligne de montage adjacentes, a meule et le disque de réglage et le dispositif de réglage de la meule et/ou le dispositif de réglage du disque de réglage sont montés directement sur le lit de la machine sur un chariot à entraînement hydraulique et/ou électromoteur réglable longitudinalement au moins le long d'un axe de mouvement longitudinal, où l'axe de déplacement longitudinal (11) du chariot (12) du disque de meule et/ou l'axe de déplacement longitudinal (24) du chariot (25) du disque de réglage et/ou l'axe de déplacement longitudinal (13) du chariot (14) du dispositif de réglage du disque de réglage et/ou l'axe de déplacement longitudinal (15) du chariot réglable (16) du dispositif de réglage du disque de réglage par rotation autour d'un axe de rotation (17) du chariot (12) du disque de réglage (3) et/ou de rotation (18) du chariot du disque de réglage et/ou de rotation (19) du chariot du dispositif de réglage du disque et/ou de l'axe de rotation 20) du chariot du dispositif de réglage de la meule.

2. Dispositif selon la revendication 1, **caractérisé en ce qu'**au moins un des axes de déplacement longitudinal des chariots du disque de réglage et/ou du disque de réglage et/ou du dispositif de réglage du disque de réglage et/ou du dispositif de réglage du disque de réglage du disque de réglage incliné, au moins dans le plan de construction de la machine, par rapport à au moins un des autres que les axes de déplacement des chariots du disque de réglage et/ou du disque de réglage et/ou du dispositif de réglage du disque de réglage et/ou du dispositif de réglage du disque de réglage du disque de réglage soient installés.

3. Dispositif selon l'une des revendications 1 ou 2, **caractérisé par le fait que** le dispositif de réglage (8) pour le disque de réglage et/ou le dispositif de réglage (9) pour le disque de réglage comprend un disque de réglage (21) avec un axe de rotation (22) et/ou un angle de réglage (26).

4. Dispositif selon l'une des revendications 1 à 3, **caractérisé en ce qu'**au moins l'axe de rotation du disque et/ou du disque de réglage et/ou des dispositifs de réglage est oblique par rapport à au moins l'axe de déplacement longitudinal des chariots du disque de réglage et/ou du dispositif de réglage pour: le disque de réglage et/ou le dispositif de réglage de la meule sont installés.

5. Dispositif selon l'une des revendications 1 à 4, **caractérisé par le fait que** le plan (23) du lit de la machine (10) est incliné dans la pièce, notamment de telle sorte que la pièce introduite puisse être déplacée sous l'effet de la gravité.

6. Dispositif selon l'une des revendications 1 à 5, **caractérisé par le fait que** l'axe de rotation de la meule et l'axe de rotation du disque de réglage sont orientés en oblique l'un vers l'autre, en particulier que l'axe de rotation de la meule de réglage et l'axe de rotation du disque de réglage se croisent dans le sens d'un lit de machine incliné (10).

7. Dispositif selon l'une des revendications 1 à 5, **caractérisé par le fait que**, par rapport à un lit de machine incliné, l'un des axes de rotation est placé horizontalement et l'autre axe de rotation est orienté vers le bas vers l'axe de rotation horizontal.

8. Dispositif selon l'une des revendications 1 à 6, **caractérisé par le fait que** l'axe de rotation du disque de rectification est aligné parallèlement à l'axe de rotation du disque de réglage et/ou de la meule.

9. Dispositif selon l'une des revendications 1 à 7, **caractérisé par** le réglage en hauteur des axes de rotation et/ou des axes de déplacement longitudinal et/ou de la pièce à usiner, notamment par réglage de la hauteur de la ligne de montage de la pièce à usiner.

10. Procédé d'utilisation de l'un des dispositifs selon l'une des revendications 1 à 9, comportant un disque de meulage avec un axe de rotation, un disque de réglage avec un axe de rotation, une ligne de montage pour fixer la pièce à usiner et un dispositif de réglage pour le disque de meulage et/ou un dispositif de réglage pour le disque de réglage sur un lit de machine, en particulier dans un plan de faire en sorte que la meule et la meule de réglage et la ligne de fixation touchent la pièce à usiner lors du rectification de la pièce à usiner, la meule et le disque de réglage et/ou le dispositif de réglage de la meule et/ou le dispositif de réglage de la meule de réglage sur un chariot à entraînement hydraulique et/ou électromoteur, réglable longitudinalement au moins le long d'un axe de déplacement, placé directement sur le lit de la machine; sont réglés dans leur position, où l'axe de déplacement longitudinal du chariot de la meule et/ou l'axe de déplacement longitudinal du chariot du disque de réglage et/ou l'axe de déplacement longitudinal du chariot du dispositif de réglage du disque de réglage et/ou l'axe de déplacement longitudinal du chariot du dispositif de réglage de la meule le chariot du disque de réglage et/ou le chariot du dispositif de réglage du disque de réglage du disque de réglage du disque de réglage et/ou du chariot du dispositif de réglage du disque et/ou du chariot du dispositif de réglage du disque de réglage du disque de réglage du meule.
